# EUROPEAN PATENT SPECIFICATION

(11) **EP 0 405 826 B1**
(45) Date of publication and mention of the grant of the patent: **01.03.1995**
(21) Application number: 90306734.6
(22) Date of filing: 20.06.1990
(51) Int. Cl.: G06F 3/033, G06F 17/30, G06K 11/18

(54) **Electronic filing systems and methods**
Vorrichtung und Verfahren zum elektronischen Aktenablegen
Systèmes et méthodes d'archivage électronique

(30) Priority: 30.06.1989 US 373402
(43) Date of publication of application: 02.01.1991
(73) Proprietor: SONY CORPORATION, Tokyo 141 (JP)
(72) Inventor: Kojima, Kiyonobu c/o Patents Division, Shinagawa-ku Tokyo 141 (JP)
(74) Representative: Thomas, Christopher Hugo

(56) References cited:
- US-A- 4 839 838
- IBM TECHNICAL DISCLOSURE BULLETIN. vol. 27, no. 1A, June 1984, NEW YORK US page 42; C.H. LEWIS: 'Position-controlled display'

## Description

This invention relates to electronic filing systems and methods to facilitate the filing and retrieving of documents.

Electronic filing systems which store documents in digital form in optical or hard disc storage have been proposed to improve the office environment. Such systems generally comprise a scanner to read documents, processing units to process information from the documents in digital form, optical or hard discs to store the data, and a printer or other visual display. Well-structured documents can be organized in these systems through methods such as categorization, addressing, and key work techniques. However, most documents in use in offices are still arranged on an individual's desk. It would be beneficial to store and retrieve such documents by reference to a physical location.

Interfacing in electronic filing systems is usually done through a keyboard and display. In some cases the standard video display terminal is divided into partitions each representing a document. A pointer can be positioned in a particular position on the screen by use of a mouse or a joystick, and a document selected in that manner. The prior art systems suffer from one or more problems. Firstly, a standard video display terminal is a relatively large piece of equipment, designed to remain in a fixed position during use. Due to the nature of video display terminals, resolution is limited, and the terminal display area, also being limited, restricts the number of documents which can be represented on the screen for selection and retrieval. Scrolling by activating a key on a keyboard is not desirable because it generally takes a long time to get to the desired position.

Even in mouse systems, it is necessary to correlate the mouse movement to the movement on the screen, which can be difficult and unnatural when attempting to scroll through documents. US patent specification US-A-4 757 302 attempts to rectify this problem by the use of tactile feedback from the mouse to control the speed of paging and to provide a "feel" as each new page is displayed. However, a mouse cannot satisfactorily operate on a cluttered desk, and the use of a standard video display terminal has drawbacks discussed above.

Another interface is known which can be activated by the movement of the user. It has been described in an article by James D. Foley published in Scientific American, Oct. 1987, pages 127 to 135. It was developed by NASA AMES Research Center and utilizes an apparatus which one wears like a pair of eyeglasses.

IBM Technical Disclosure Bulletin Volume 27 No. 1A (June 1984) page 42 discloses a display mounted on a mouse or puck. The position of the mouse or puck within a simulated page area controls which portion of a page of data is displayed.

According to the present invention there is provided an electronic filing system for storing and retrieving documents converted into an electrical form, the system comprising:
a combined display and position and orientation sensor;
an absolute position calculator connected to receive output signals from said sensor and to supply an output indicative of a current position and orientation of said combined display and position and orientation sensor;
a source of digitized video information;
a central processing unit for receiving the output from said source and from said absolute position calculator;
storage means;
a video memory unit; and
a scroll and zooming unit;
wherein:
said central processing unit is selectively operable to store a document, together with associated position data dependent on a current output of said absolute position calculator, in said storage means, and to retrieve a document from said storage means and to supply the retrieved document to said video memory unit in response to a comparison of said position data associated with that document and a current output of said absolute position calculator;
said video memory unit has an output connected to said scroll and zooming unit; and
said scroll and zooming unit also receives an output from said sensor, and produces an output which is supplied for display by said combined display and position and orientation sensor.

According to the present invention there is also provided a method of storing and retrieving digital information data, said method comprising the steps of:
producing an output data signal which is a function of data from a document to be stored;
determining the position and orientation of a display unit and providing a position signal associated with said document to be stored, which is indicative of said position and said orientation;
storing said output data signal and said position signal;
retrieving data representing a stored document in response to a comparison of said position data associated with said document and a current position and orientation of said display unit
writing said retrieved data into a video memory unit showing there is a document at a determined position in a virtual space; and
scrolling and zooming data related to said position signal to provide a desired portion of the total data to be utilized within said video memory unit.

An embodiment of the invention contains a display device and provides a simulated environment or virtual world. The display unit does not require the eyeglasses apparatus, but utilizes a display and sensor apparatus to simulate a magnifying glass. The simulation may be of a desk or wall, for the storage and retrieval of documents, which makes possible the natural interaction of the user rather than the usual interface of a keyboard and video display terminal. It does not require a user to wear a somewhat cumbersome and unnatural apparatus.

Prior art systems can generally only store and retrieve documents effectively when the documents adhere to a well-structured format.

Embodiments of the present invention can overcome these problems. The display unit can be substantially flat and much smaller than a video terminal, and as such it can be hand-held and readily moved like a magnifying glass. The inherent limitation of screen size in prior art systems can be eliminated. The display becomes, for example, the entire desk top of documents, parts of which can be selectively viewed through the magnifying glass. Finding and retrieving information in stored documents is made easier because the documents are stored according to a position in space. The positioning of the display unit is a natural and comfortable interface for a user, not only for the location of the documents, but also for the scrolling of the documents.

Embodiments of the invention are capable of operation in a three-dimensional, as well as a two-dimensional, simulated environment.

According to present invention there is also provided an electronic apparatus for storage and retrieval of information from documents in a digital form, comprising a combined display and position and orientation sensor providing associated output signals, an absolute position calculator connected to receive said output signals from said position and orientation sensor, a signal source of digitized video information, and a central processing unit for receiving the outputs from said position and orientation sensor, said central processing unit providing a first output available for connection to storage means and a second output for connection to a video memory unit, said video memory unit having an output connected to a smooth scroll and zooming unit, said scroll and zooming unit receiving an output from said position and orientation sensors and producing an output which is connected to said flat display.

According to the present invention there is also provided a method of storing and retrieving digital information data, comprising the steps of providing documentation which is to be filed and retrieved, producing an output data signal which is a function of the data from the documentation to be stored, determining the position and orientation of a display unit and providing a position signal which is indicative of said position and said orientation, processing said output data signal and position signal to effect recording, processing to write data into a video memory unit showing there is a document at the determined position in the space, and scrolling and zooming data related to the signal from absolute position to provide a desired portion of the total data to be utilized within said video memory unit.

The small flat display can act like a magnifying glass to look at any very small document located in a simulated space such as a desk top or wall. Not many large documents can be placed on the restricted size of an office desk. Accordingly, in order to store many documents, they are reduced in size. Conceptually, as in microfiche techniques, if one cuts microfiche into pieces so that each page is a small individual piece and puts them all on the desk or posts them on the wall, one can use a magnifier to browse through them and to read them. It is this concept which is used in embodiments of the invention in electronic form.

Embodiments of the invention can provide a natural user-friendly interface. They can be used not only with well-structured documents, but also with unstructured documents to provide paperless offices. The ability to focus in as one would with a magnifying glass allows one to use a natural and easy to use interface.

The invention will now be described by way of example with reference to the accompanying drawings, throughout which like parts are referred to by like references, and in which:
Figure 1 is a perspective view of a display unit; and
Figure 2 is a block diagram of the components of a system forming an embodiment of the invention.

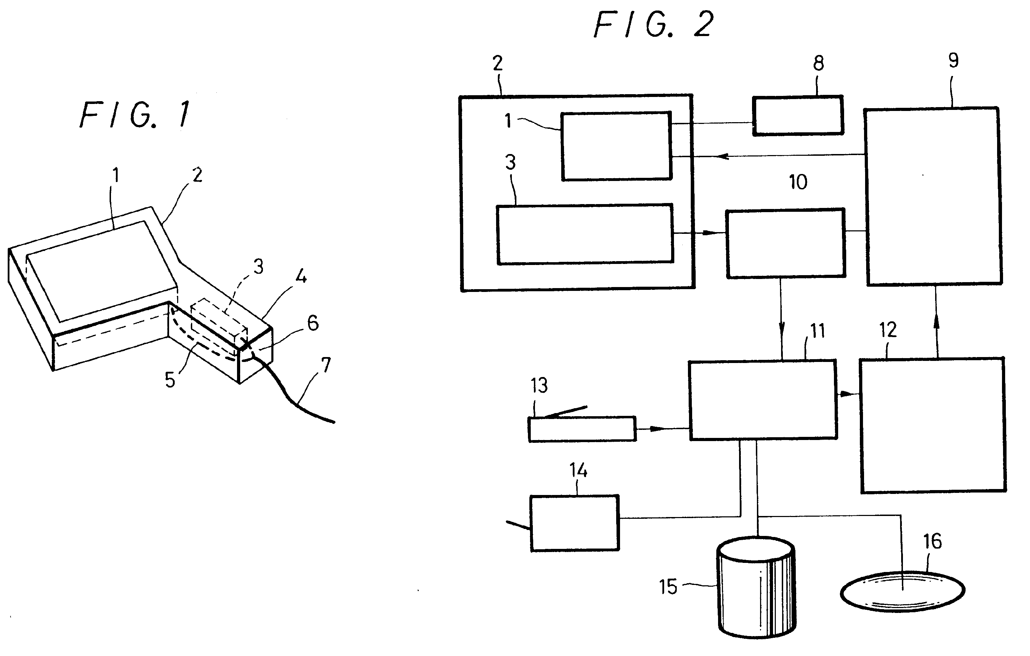

A display unit 2 shown in Figure 1 comprises a flat display 1 and a position and orientation sensor 3. A handle 4 is designed to be held by the user. A cable 5 to the display 1 and a cable 6 from the position and orientation sensor 3 are combined in a display unit cable 7. The display 1 can be a liquid crystal, plasma or similar display.

The position and orientation sensor 3 is realized by utilizing a coil in a magnetic field (for example as described in Scientific American, Oct. 1987, page 130), or ring laser gyros using known inertial navigation systems technology. A display driver provides power and control to the display 1.

Referring also to Figure 2, a video signal for the display 1 to enable visual reproduction of a document or part of a document is provided from the smooth scroll and zooming unit 9, which references the location in a video memory unit 12 corresponding to the document or part of a document to be displayed.

An absolute position calculator 10 calculates the position of the display unit 2 using the data from the position and orientation sensor 3. If the position and orientation sensor 3 is a gyro type sensor, like a ring laser gyro, and provides only the acceleration, the absolute position calculator 10 calculates integrals of the data to derive the absolute position in space. An input device, for example, an image scanner 13 scans the documents like a photocopying machine and transforms the information in the documents into digital signals and sends the data to a central processing unit (CPU) 11. The CPU 11 stores the data in a hard disc 15 or an optical disc 16 to show the document on the display 1, the CPU 11 sends the data to the video memory unit 12. To print the document, the CPU 11 sends the data to a printer 14.

To register a document, the following process is utilized. The user scans the document through the image scanner 13, types it in, or obtains it from other sources such as another storage device or system. A title and/or keyword(s) can be added to it, and the digitized document is then stored on hard disc or an optical disc. Once the data are taken, the user must specify the position for it in the simulated environment or virtual world. The display unit 2 is moved to the desired position and the position is registered to hold that document. The absolute position calculator 10 sends the absolute position to the CPU 11 and stores the position data in association with the data of the registered document.

To look at the document, the user moves the display unit 2 like one would a magnifying glass. If the position of the display unit 2 matches a position where a document was registered, the centre of the display 1 will show the document. The title of the document, the shape of the document, a rough sketch of the document or the full contents of the document can be displayed. In a preferred embodiment, the title of the document is shown first. In retrieval mode, the CPU 11 puts the titles of documents in the video memory unit 12 at the corresponding position. The scroll and zooming unit 9 shows one portion of the area getting data from the video memory unit 12.

To retrieve a document, it is necessary to move the display unit 2 to the position where the document had been registered in the simulated environment. As the display unit 2 is being moved into position, the titles of the documents are scrolled on the display 1. When the display unit 2 is within a predetermined distance of the desired document position, the full content of the document is placed in the video memory unit 12 by the CPU 11. The contents of the document can be scrolled in response to the movement of the display unit 2 as one would do with a magnifier. In a preferred embodiment, as one approaches the desired document, the title of the document will appear. Advancing the display unit 2 to the title causes the document to be opened to show the contents which can be scrolled as above. The display unit 2 operates as an electronic magnifier in this way.

In the second embodiment, a position sensor can be provided for the user to wear on his head. The sensor on the display unit 2 detects its absolute position and orientation. The other sensor, which is set on the user's head, is used to calculate the distance and the view angle between the user's head and the display unit 2. Using these data, the display unit 2 can show an aesthetic view as if it is a view with a magnifying glass in a simulated environment.

Since a magnifying glass has a fixed focal distance, it has an area which is out of focus. In an embodiment of the invention, this focusing is controlled according to the following scenario.

The display unit 2 can be set in front of the eyes to see the whole scene. The user will see virtual documents on the desk or hung in strings in the room or on a wall. The display unit acts like a glass plate in this case. As the user walks towards the target object with the display unit in his hand, it acts like a glass plate showing the target object growing larger. If the display unit 2 is moved away from or towards the user, the position is changed and the object enlarges or diminishes in size. In this manner, the display unit 2 acts like a magnifying glass.

Responses to the movements of the magnifying glass are determined after modelling the particular information space required. An information space is very large and complex, and the filtering function must be incorporated to hide detail. In conceptual information space, scene detail has two meanings. One is the usual meaning; to see a small thing larger. The other is to see the detail of an object. Zooming in on an icon, for example, shows its contents, not an enlarged icon. In the context of this embodiment, focus is used in its metaphorical sense to express the second type of detail.

In this embodiment there are two ways to reach an object in detail. One is to walk toward the object. The other is to adjust the display unit 2. The information level given by the latter approach is equivalent to that of the physical approach.

It is known to use a "Fisheye L" approach in attempting to navigate large information spaces. This was described by G.W. Furnas in a publication entitled "Generalized Fisheye Views" published in CHI ′86 Conference Proceedings, Boston, MA, pages 16 to 23. This approach is limited only to the flat screen environment. Embodiments of the invention give the user a sense of moving in a real world, because his motion generates magnifications of the screen environment. Users will always see both a simulated environment in the display unit 2 and the real physical world outside the display unit 2. They can also move easily between the detailed and overall view of their space in order to navigate to new areas. This allows them to use the context of the entire information space to locate themselves.

Although the concept is especially suitable for three-dimensional space, it can also be used in two-dimensional space as well. This would require the integration of the display unit and a mouse into one unit. This would be particularly useful in dealing with a very large spread sheet.

## Claims

1. An electronic filing system for storing and retrieving documents converted into an electrical form, the system comprising:
a combined display (1) and position and orientation sensor (3);
an absolute position calculator (10) connected to receive output signals from said sensor (3) and to supply an output indicative of a current position and orientation of said combined display and position and orientation sensor;
a source (13) of digitized video information;
a central processing unit (11) for receiving the output from said source (13) and from said absolute position calculator (10);
storage means (15, 16);
a video memory unit (12); and
a scroll and zooming unit (9);
wherein:
said central processing unit is selectively operable to store a document, together with associated position data dependent on a current output of said absolute position calculator (10), in said storage means, and to retrieve a document from said storage means and to supply the retrieved document to said video memory unit in response to a comparison of said position data associated with that document and a current output of said absolute position calculator (10);
said video memory unit (12) has an output connected to said scroll and zooming unit (9); and
said scroll and zooming unit also receives an output from said sensor (3), and produces an output which is supplied for display by said combined display (1) and position and orientation sensor (3).

2. A system according to claim 1, wherein said combined display and position and orientation sensor comprises a handle portion (4) and a display portion (1).

3. A method of storing and retrieving digital information data, said method comprising the steps of:
producing an output data signal which is a function of data from a document to be stored;
determining the position and orientation of a display unit (2) and providing a position signal associated with said document to be stored, which is indicative of said position and said orientation;
storing said output data signal and said position signal;
retrieving data representing a stored document in response to a comparison of said position data associated with said document and a current position and orientation of said display unit (2) ;
writing said retrieved data into a video memory unit (12) showing there is a document at a determined position in a virtual space; and
scrolling and zooming data related to said position signal to provide a desired portion of the total data to be utilized within said video memory unit (12).

## Patentansprüche

1. Elektronisches Aktensystem zum Speichern und Rückgewinnen von in elektrische Form umgesetzten Dokumenten mit
einer Kombination aus Anzeigevorrichtung (1) und Positions- und Orientierungssensor (3),
einem Rechner (10) zur Absolutpositionsberechnung, der so angeschlossen ist, daß er Ausgangssignale des Sensors (3) aufnimmt und ein Ausgangssignal liefert, das für die aktuelle Position und Orientierung der Kombination aus Anzeigevorrichtung (1) und Positions- und Orientierungssensor (3) kennzeichnend ist,
einer Quelle (13) für digitalisierte Videoinformationen,
einer Zentralprozessoreinheit (11) zur Aufnahme der Ausgangssignale der Quelle (13) und des Rechners (10) zur Absolutpositionsberechnung,
einer Speichereinrichtung (15, 16),
einer Videospeichereinheit (12) und
einer Einheit (9) zur Durchführung eines Bildlaufs (Scrollen) und zur Änderung der Darstellungsgröße (Zoomen),
wobei
die Zentralprozessoreinheit betreibbar ist, um wahlweise
- ein Dokument zusammen mit zugeordneten, von dem aktuellen Ausgangssignal des Rechners (10) zur Absolutpositionsberechnung abhängigen Positionsdaten in der Speichereinrichtung zu speichern und
- ein Dokument aus der Speichereinrichtung zurückzugewinnen und das zurückgewonnene Dokument in Abhängigkeit von einem Vergleich der diesem Dokument zugeordneten Positionsdaten mit dem aktuellen Ausgangssignal des Rechners (10) zur Absolutpositionsberechnung der Videospeichereinheit zuzuführen,
die Videospeichereinheit (12) einen mit der Einheit (9) zur Durchführung eines Bildlaufs und zur Änderung der Darstellungsgröße verbundenen Ausgang besitzt, und
die Einheit zur Durchführung eines Bildlaufs und zur Änderung der Darstellungsgröße außerdem ein Ausgangssignal aus dem Sensor (3) aufnimmt und ein Ausgangssignal erzeugt, das der Kombination aus Anzeigevorrichtung (1) und Positions- und Orientierungssensor (3) zur Anzeige zugeführt wird.

2. System nach Anspruch 1, bei dem die Kombination aus Anzeigevorrichtung und Positions- und Orientierungssensor ein Handhabungsteil (4) und ein Anzeigeteil (1) aufweist.

3. Verfahren zum Speichern und Rückgewinnen von digitalen Informationsdaten mit den Verfahrensschritten:
Erzeugen eines Ausgangssignals, das eine Funktion von Daten aus einem zu speichernden Dokument ist,
Erfassen der Position und Orientierung einer Anzeigeeinheit (2) und Lieferung eines dem zu speichernden Dokument zugeordneten Positionssignals, das für die genannte Position und Orientierung kennzeichnend ist,
Speichern des Ausgangsdatensignals und des Positionssignals,
Rückgewinnen von ein gespeichertes Dokument repräsentierenden Daten in Abhängigkeit von einem Vergleich der diesem Dokument zugeordneten Positionsdaten mit der aktuellen Position und Orientierung der Anzeigeeinheit (2),
Einschreiben der rückgewonnenen Daten in eine Videospeichereinheit (12), die zeigen, daß dort ein Dokument an einer vorbestimmten Position in einem virtuellen Raum existiert, und
Durchführen eines Bildlaufs und Ändern der Darstellungsgröße für die auf das genannte Positionssignal bezogenen Daten zum Bereitstellen eines gewünschten Teils der gesamten Daten, die in der Videospeichereinheit (12) zu benutzen sind.

## Revendications

1. Système de classement électronique permettant de mémoriser et de retrouver des documents convertis sous forme électrique, le système comprenant :
un dispositif combiné afficheur (1) et capteur de position et d'orientation (3) ;
un calculateur de position absolue (10) connecté de façon à recevoir des signaux de sortie de la part dudit capteur (3) et à fournir un signal de sortie indicatif d'un paramètre courant de position et d'orientation dudit dispositif combiné afficheur et capteur de position et d'orientation ;
une source (13) d'informations vidéo numérisées ;
une unité centrale de traitement (11) destinée à recevoir le signal de sortie de ladite source (13) et dudit calculateur de position absolue (10) ;
un moyen de mémorisation (15, 16) ;
une unité de mémoire vidéo (12) ; et
une unité de défilement et d'exécution de zoom, ou dilatation d'image sur écran, (9) ;
où :
ladite unité centrale de traitement peut être sélectivement activée pour mémoriser un document, en même temps qu'une donnée de position associée dépendant d'un signal de sortie courant dudit calculateur de position absolue (10), dans ledit moyen de mémorisation, et pour retrouver un document dans ledit moyen de mémorisation et fournir le document retrouvé à ladite unité de mémoire vidéo en réponse à une comparaison de ladite donnée de position associée à ce document et d'un signal de sortie courant dudit calculateur de position absolue (10) ;
ladite unité de mémoire vidéo (12) comporte une sortie qui est connectée à ladite unité de défilement et d'exécution de zoom (9) ; et
ladite unité de défilement et d'exécution de zoom reçoit également un signal de sortie de la part dudit capteur (3) et produit un signal de sortie qui est fourni en vue d'un affichage par ledit dispositif combiné afficheur (1) et capteur de position et d'orientation (3).

2. Système selon la revendication 1, où ledit dispositif combiné afficheur et capteur de position et d'orientation comprend une partie poignée (4) et une partie affichage (1).

3. Procédé permettant de mémoriser et de retrouver des données d'informations numériques, ledit procédé comprenant les opérations suivantes :
produire un signal de donnée de sortie qui est une fonction d'une donnée provenant d'un document à mémoriser ;
déterminer la position et l'orientation d'une unité d'affichage (2) et produire un signal de position associé audit document à mémoriser, lequel est indicatif de ladite position et de ladite orientation ;
mémoriser ledit signal de donnée de sortie et ledit signal de position ;
retrouver la donnée représentant un document mémorisé en réponse à la comparaison de ladite donnée de position associée audit document et d'un paramètre courant de position et d'orientation de ladite unité d'affichage (2) ;
écrire ladite donnée retrouvée dans une unité de mémoire vidéo (12) montrant qu'il y a un document en une position prédéterminée dans un espace virtuel ; et
faire défiler et dilater, par effet de zoom, la donnée se rapportant audit signal de position afin de produire une partie voulue de la donnée totale à utiliser à l'intérieur de ladite unité de mémoire vidéo (12).
